Europäisches Patentamt

(19) European Patent Office

Office européen des brevets

(11) Numéro de publication: **0 074 889**

**A2**

(12) **DEMANDE DE BREVET EUROPEEN**

(21) Numéro de dépôt: 82401626.5

(22) Date de dépôt: 02.09.82

(51) Int. Cl.³: **G 01 N 27/90**

(30) Priorité: 14.09.81 FR 8117312

(43) Date de publication de la demande:
23.03.83 Bulletin 83/12

(84) Etats contractants désignés:
BE DE GB IT NL SE

(71) Demandeur: COMMISSARIAT A L'ENERGIE ATOMIQUE
Etablissement de Caractère Scientifique Technique et
Industriel
31/33, rue de la Fédération
F-75015 Paris(FR)

(72) Inventeur: David, Bernard
3, Résidence du Château de Courcelles
F-91190 Gif sur Yvette(FR)

(72) Inventeur: Pigeon, Michel
14, Avenue du Maréchal Foch
F-91440 Bures sur Yvette(FR)

(74) Mandataire: Mongrédien, André et al,
c/o BREVATOME 25, rue de Ponthieu
F-75008 Paris(FR)

(54) Procédé et dispositif de contrôle d'une surface au moyen d'un capteur à courants de Foucault.

㊼ L'invention concerne un procédé et des dispositifs de contrôle de la surface (12) d'une pièce (10) au moyen d'un capteur (14) à courants de Foucault.

En effectuant un balayage de la pièce à l'aide du capteur (14) selon un chemin donné (16), on enregistre les valeurs échantillonnées du signal délivré par le capteur pour des positions bien définies de ce dernier. En restituant les signaux, on peut simuler un déplacement du capteur selon un chemin (17) différent, et/ou simuler le déplacement d'un capteur de plus grande taille ou d'un type différent.

Application notamment au contrôle des tubes des générateurs de vapeur dans les réacteurs nucléaires et à l'examen des crayons combustibles irradiés dans ces réacteurs.

FIG. 1a

FIG. 1b

La présente invention a pour objet un procédé de contrôle de la surface d'une pièce au moyen d'un capteur à courants de Foucault délivrant un signal représentatif de l'état de cette surface, ainsi que des dispositifs permettant de mettre en oeuvre un tel procédé.

Il est actuellement de pratique courante d'effectuer le contrôle de la surface des pièces en matériau conducteur de l'électricité en utilisant des capteurs à courants de Foucault. Le signal délivré par le capteur permet en effet de donner une information concernant l'état de la surface et la présence éventuelle de défauts en déplaçant le capteur en face de cette surface. A titre d'exemple, un contrôle de ce type est effectué périodiquement dans les tubes des échangeurs de chaleur ou des générateurs de vapeur équipant les centrales nucléaires. Toutefois, cette application n'est pas limitative et des contrôles de surface au moyen d'un capteur à courants de Foucault sont réalisés dans de nombreux autres domaines.

Quelle que soit l'application envisagée, la technique de contrôle utilisée à ce jour consiste à effectuer un balayage aussi complet que possible de la surface à contrôler et à observer au moyen d'un système de lecture directe les variations du signal délivré par le capteur afin d'en déduire l'état de la surface contrôlée.

Bien que cette technique de contrôle soit utilisée à ce jour de façon courante, elle présente un certain nombre d'inconvénients liés à la nécessité d'adapter le capteur et la trajectoire suivie par celui-ci à la taille et à l'orientation des défauts. En effet, pour détecter un défaut sans difficulté, la taille du capteur doit être aussi proche que possible

B 7357.3 GP

2      0074889

de celle des défauts à détecter. De plus, pour la recherche de défauts ponctuels, on utilise des capteurs différentiels qui doivent être orientés de telle sorte que la direction reliant les deux enroulements qui les composent soit confondue avec l'axe du plus fort gradient de variation du signal délivré par le capteur. Or, deux cas au moins peuvent se présenter où ces conditions ne peuvent pas être réalisées :

1) Lorsqu'on ne connait à priori ni la taille, ni l'orientation des défauts ;

2) Lorsque le trajet parcouru par le capteur est imposé.

La présente invention a précisément pour objet un procédé de contrôle de la surface d'une pièce au moyen d'un capteur à courants de Foucault ne présentant pas les inconvénients du procédé de la technique antérieure et permettant notamment de réaliser un déplacement fictif du capteur selon la direction souhaitée, qui peut être différente de la direction de balayage réelle de la surface par le capteur, et d'adapter de façon fictive la taille du capteur au type de défaut que l'on souhaite détecter.

A cet effet, et conformément à la présente invention, il est proposé un procédé de contrôle de la surface d'une pièce au moyen d'un capteur à courants de Foucault comprenant au moins une sonde à courants de Foucault délivrant un signal représentatif de l'état de cette surface, ce procédé étant caractérisé en ce qu'il consiste à :

- effectuer avec le capteur un balayage selon un ordre donné de zones de mesure élémentaires définies à la surface de la pièce ;
- enregistrer les valeurs échantillonnées du signal délivré par le capteur pour chacune des zones de mesure élémentaires ; et

B 7357.3 GP

- restituer des signaux obtenus à partir d'une ou plusieurs valeurs échantillonnées correspondant à des zones voisines de la surface, dans un ordre quelconque souhaité.

Selon l'application envisagée, on peut utiliser soit un capteur absolu comportant au moins une sonde comprenant une seule bobine à courants de Foucault, soit un capteur différentiel comportant au moins une sonde comprenant deux bobines.

Conformément à un premier mode de réalisation du procédé selon l'invention, on restitue des signaux correspondant chacun à l'une des valeurs échantillonnées enregistrées, selon un ordre différent de l'ordre de balayage. On peut ainsi effectuer un déplacement fictif du capteur selon une direction optimale pour la détection des défauts. Dans ce cas, lorsque les zones de mesure élémentaires définissent au moins deux directions différentes, l'ordre de balayage peut suivre une première direction tandis que l'ordre de restitution des signaux suit une direction différente de cette première direction.

Conformément à un deuxième mode de réalisation du procédé selon l'invention, on restitue des signaux dont chacun est représentatif de la valeur moyenne d'un groupe de valeurs échantillonnées correspondant à des zones voisines. La taille du capteur peut ainsi être augmentée de façon fictive, ce qui permet de détecter des défauts dont la dimension trop importante par rapport au capteur n'aurait pas permis à ce dernier de les détecter.

Conformément à un troisième mode de réalisation du procédé selon l'invention, on restitue des signaux dont chacun est représentatif de la différence entre les valeurs échantillonnées correspondant à deux zones voisines. Ce mode de réalisation, qui concerne exclusivement l'utilisation d'un capteur absolu, permet de modifier de façon fictive le type de capteur utilisé en simulant un balayage au moyen d'un capteur différentiel.

Dans une variante combinant les caractéristiques des deuxième et troisième modes de réalisation de l'invention, on restitue des signaux dont chacun est représentatif de la différence entre les valeurs moyennes de deux groupes de valeurs échantillonnées correspondant à des zones voisines. Il est ainsi possible, en effectuant le balayage au moyen d'un capteur de type ponctuel, de modifier de façon fictive la nature et la forme du capteur afin d'obtenir des signaux du type de ceux qui sont délivrés habituellement par un capteur de type différentiel de plus grandes dimensions.

Bien entendu, le premier mode de réalisation peut se combiner avec les autres, de telle sorte que le balayage fictif déterminé par les signaux restitués correspond au balayage qui serait effectué par un capteur d'un type et/ou de dimensions différentes du capteur effectivement utilisé, ce balayage fictif étant en outre effectué selon un ordre différent du balayage réel.

La présente invention a également pour objet un dispositif de contrôle de la surface d'une pièce au moyen d'un capteur à courants de Foucault comportant au moins une sonde à courants de Foucault délivrant un signal représentatif de l'état de cette surface.

Dans un premier mode de réalisation, ce dispositif comprend des moyens pour faire balayer par ledit capteur, selon un ordre donné, des zones de mesure élémentaires définies à la surface de la pièce, des moyens pour mémoriser les valeurs échantillonnées du signal d'erreur délivré par le capteur pour chacune des zones élémentaires, et des moyens pour restituer une série de signaux à partir d'une ou plusieurs valeurs échantillonnées correspondant à des zones voisines de la surface, dans un ordre quelconque souhaité.

Dans un deuxième mode de réalisation, ce dispositif comprend des moyens pour faire balayer par le capteur, selon un ordre donné, les zones de mesure élémentaires définies à la surface de la pièce et formant au moins deux directions différentes, l'ordre de balayage suivant une première de ces directions, des moyens pour aiguiller vers des voies différentes chacune des valeurs échantillonnées du signal d'erreur délivré par le capteur pour chacune des zones de mesure élémentaires correspondant à cette première direction, et des moyens pour enregistrer sur chacune des voies des valeurs échantillonnées selon un ordre correspondant à une autre direction.

On décrira maintenant, à titre d'exemple non limitatif, différentes variantes de réalisation de l'invention, en se référant aux dessins annexés, dans lesquels :

- les figures 1a et 1b illustrent de façon schématique le principe qui est à l'origine de l'invention, la figure 1a montrant un exemple de balayage d'une surface plane au moyen d'un capteur à courants de Foucault de type absolu tandis que la figure 1b montre l'ordre de remplissage qui en résulte d'un tableau des valeurs échantillonnées du signal délivré par le capteur, ce tableau étant établi en fonction de coordonnées définies à l'avance de la pièce examinée ;

- la figure 2a montre un tableau comparable à celui de la figure 1b et illustre le principe d'un mode de réalisation de l'invention selon lequel, lors de la restitution des signaux, on groupe les signaux contenus dans des cases voisines du tableau et on en

B 7 357.3 GP

effectue la valeur moyenne afin de simuler le balayage de la surface au moyen d'un capteur de plus grande taille que celui qui a été réellement utilisé ;

- la figure 2b représente une partie du tableau de la figure 1b et illustre le principe d'un autre mode de réalisation de l'invention selon lequel on restitue les signaux en les groupant de façon appropriée, afin de simuler le balayage de la surface au moyen d'un capteur différentiel de grande taille, alors que le capteur utilisé réellement au cours de la mesure était un capteur absolu de petite taille ;

- la figure 3 illustre de façon schématique un premier mode de réalisation d'un dispositif de mise en oeuvre du procédé selon l'invention, utilisant la mise en mémoire des signaux délivrés par le capteur et la restitution ultérieure de ces signaux ;

- la figure 4 illustre de façon schématique un deuxième mode de réalisation d'un dispositif de mise en oeuvre du procédé selon l'invention, utilisant un aiguillage en temps réel des signaux délivrés par le capteur ;

- la figure 5 illustre de façon schématique une variante du dispositif de la figure 4 permettant de restituer des signaux représentant des déplacements fictifs du capteur selon trois directions différentes, et

- les figures 6a à 6c illustrent les trois déplacements qui peuvent être obtenus avec le dispositif de la figure 5.

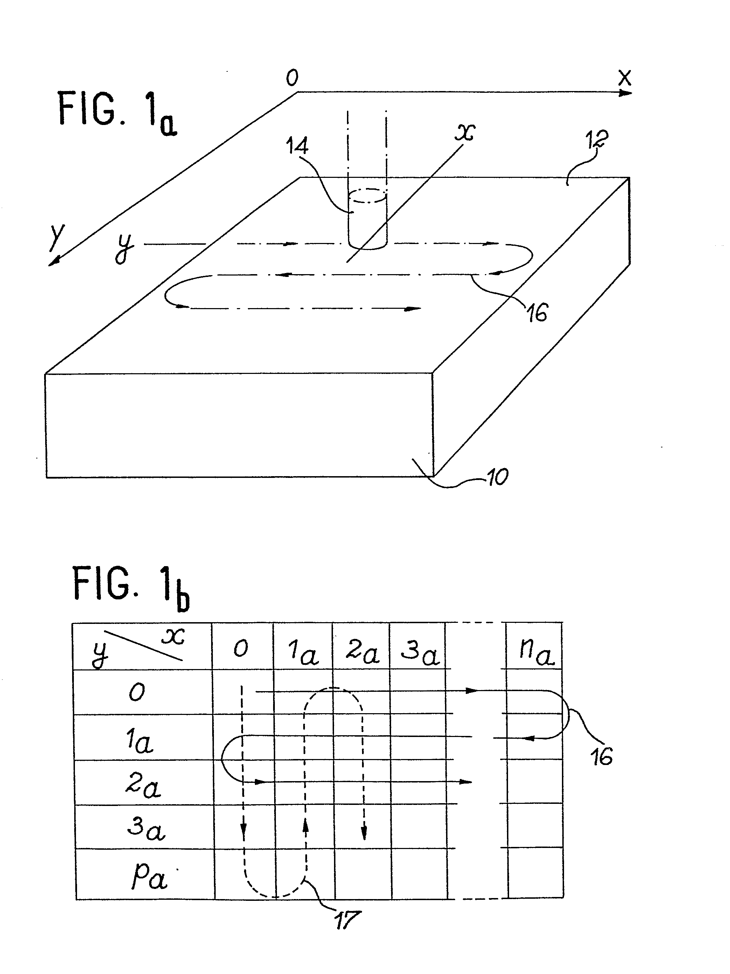

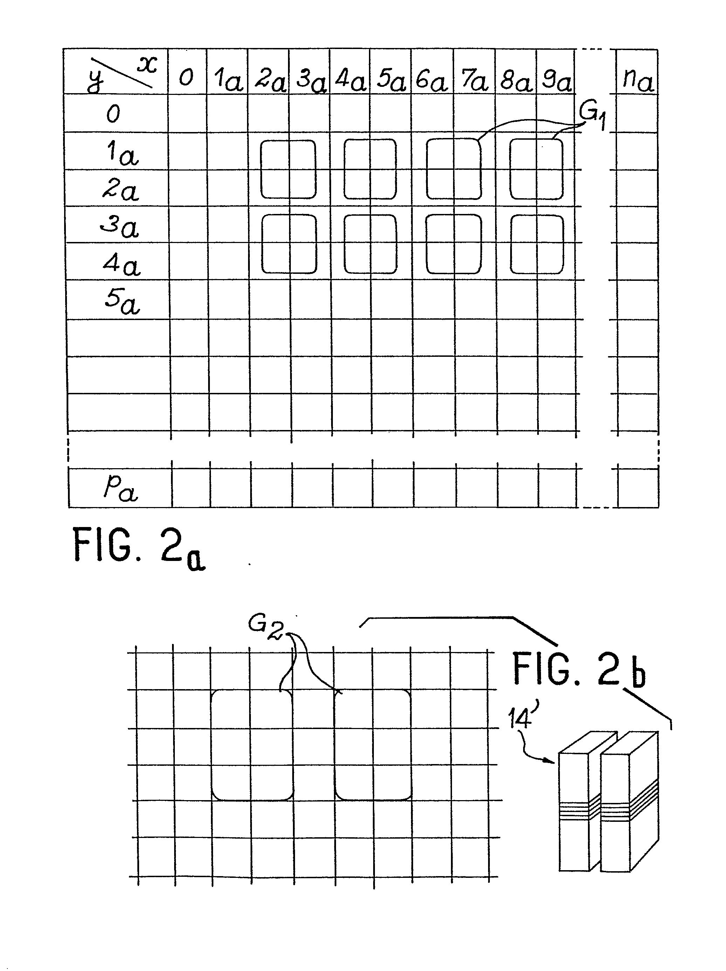

On exposera tout d'abord, en se référant aux figures 1a, 1b, 2a et 2b, le principe du procédé de contrôle selon l'invention, appliqué à titre d'exemple à une pièce 10 de forme parallélépipédique dont on examine la surface supérieure 12 au moyen d'un capteur absolu 14 qui se compose dans le cas le plus simple d'une sonde à courants de Foucault comportant une seule bobine dont l'axe est disposé perpendiculairement à la surface 12.

Toutefois, on notera dès à présent que le procédé selon l'invention peut être appliqué à des pièces de formes très différentes, incluant notamment des pièces dont le balayage peut être effectué en déplaçant le capteur selon une seule direction. Parmi les pièces de ce type, on peut notamment citer les tubes ou les barres pleines qui peuvent être contrôlés en déplaçant parallèlement à leur axe, un capteur à courants de Foucault du type à encerclement. Les tubes peuvent aussi être contrôlés par l'intérieur au moyen d'un capteur approprié que l'on déplace également parallèlement à l'axe du tube. Dans ces deux cas, la taille, et le type, du capteur équivalent peuvent être modifiés selon l'invention.

Dans le cas d'une surface telle que la surface 12 illustrée sur la figure 1, le balayage de cette surface ne peut pas être réalisé en déplaçant le capteur selon une seule direction. Pour cette raison, on voit sur la figure 1 que les déplacements du capteur 14 parallèlement à la surface 12 sont repérés au moyen de deux coordonnées perpendiculaires OX et OY. Le capteur 14, qui est associé de façon connue à un appareillage approprié, délivre un signal de tension dont les variations sont représentatives des défauts de la pièce examinée.

Selon les techniques de contrôle antérieures, aussi bien que selon le procédé de l'invention, les dimensions du capteur 10 ainsi que le trajet parcouru par ce capteur pour effectuer le balayage de l'ensemble de la surface 12 de la pièce à examiner, sont uniques pour une opération de contrôle donnée. En d'autres termes, le type et les dimensions du capteur

B 7357.3 GP

utilisé, ainsi que le trajet parcouru par ce capteur, qu'ils soient imposés ou arbitraires, déterminent la valeur des signaux délivrés par le capteur.

Toutefois, pour réaliser un contrôle efficace des pièces, on sait qu'il est nécessaire d'adapter le capteur et le trajet parcouru par celui-ci à la taille et à l'orientation des défauts. Ainsi, l'orientation d'un capteur différentiel est déterminante pour la détection des défauts ponctuels. En effet, un tel capteur compare à tout instant deux zones voisines de la pièce examinée. La meilleure perception d'un défaut sera donc obtenue lorsque le signal différentiel délivré par le capteur sera maximal, c'est-à-dire lorsque la direction reliant les deux enroulements sera confondue avec l'axe du plus fort gradient de variation du signal.

De même, la taille du capteur doit être du même ordre de grandeur que celle des défauts à détecter. En effet, s'il est trop grand, le capteur ne sera que faiblement affecté par le défaut. Au contraire, s'il est trop petit, le capteur risque de perdre la perception du défaut parce que, de tous côtés, il ne "voit" que lui.

Or, deux cas au moins peuvent se présenter où ces conditions ne peuvent pas être réalisées lors du balayage de la pièce par le capteur :

1) Lorsqu'on ne connaît a priori ni la taille, ni l'orientation des défauts ;

2) Lorsque le trajet parcouru par le capteur lors d'une mesure dynamique est imposé.

Afin de remédier à ces inconvénients de la technique antérieure, le principe du procédé selon l'invention consiste, lors du balayage de la surface 12 par le capteur 14, à découper cette surface en un certain nombre de zones de mesure élémentaires séparées par un pas d'acquisition a. Dans le cas d'une surface repérée par deux coordonnées OX et OY, comme l'illustre la figure 1a, ces zones forment par exemple un quadrillage de la surface dont la finesse dépend de la taille du capteur. Ce quadrillage conduit à associer à la surface 12 examinée un tableau de valeurs échantillonnées enregistrées lors du déplacement du capteur 14 en face de cette surface, comme l'illustre la figure 1b. Ainsi, si le capteur 14 se déplace selon un trajet du type de celui repéré par la ligne 16 sur la figure 1a, le tableau de la figure 1b sera rempli ligne par ligne selon ce chemin 16. En d'autres termes, à chaque case du tableau de la figure 1b sont associées les coordonnées x et y du capteur et la valeur échantillonnée du signal qu'il délivre dans cette position, le sens de remplissage des cases étant imposé par le chemin 16 suivi par le capteur. Conformément à l'invention, le balayage de la surface de la pièce par le capteur s'accompagne donc d'une acquisition des données que constituent les valeurs échantillonnées du signal délivré par le capteur et enregistré lors du déplacement de ce dernier.

Une fois le tableau de la figure 1b rempli, la notion dynamique de sens de remplissage disparaît pour faire place à une notion statique de valeurs associées à des positions x et y.

La relecture du tableau de la figure 1b à une cadence bien définie fait réapparaître une notion dynamique de sens de relecture simulant un déplacement fictif du capteur. En effet, cette relecture est totalement indépendante du trajet 16 suivi par le capteur lors de l'acquisition des données. On peut donc relire le tableau de la figure 1b aussi bien ligne par ligne que colonne par colonne (trajet 17 sur la figure 1b), ou même en oblique, de gauche à droite, de bas en

B 7357.3 GP

haut, de haut en bas, ou suivant toute autre technique mettant bout à bout des valeurs contiguës. Il est ainsi possible, notamment, de suivre de façon fictive un trajet différent du trajet 16 et plus favorable à la détection de certains défauts.

Les avantages présentés par le remplissage du tableau de la figure 1b au moyen de valeurs échantillonnées du signal délivré par le capteur 14 ne sont toutefois pas limités à la possibilité de relecture de ce tableau selon un trajet fictif différent.

Ainsi, dans le cas représenté sur la figure 1a où le balayage de la surface 12 a été réalisé au moyen d'un capteur absolu comportant une seule bobine à courants de Foucault, il est possible, au moment de la relecture du tableau de la figure 1b, de simuler un balayage de la surface 12 au moyen d'un capteur différentiel dont les deux enroulements sont alignés sur le trajet 16 parcouru par le capteur 14. En effet, la différence de deux valeurs contiguës du tableau de la figure 1b correspond à la mesure différentielle que pourrait effectuer un capteur dont les deux enroulements occuperaient les deux positions en question.

Dans le cas non représenté où le capteur utilisé lors du balayage de la surface est un capteur différentiel qui se compose dans le cas le plus simple d'une sonde à courants de Foucault comportant deux bobines, il est possible, en effectuant un déplacement fictif du capteur lors de la restitution des signaux, perpendiculaire aux déplacements réels du capteur lors du balayage (ligne par ligne si le balayage s'est fait colonne par colonne, ou inversement), de restituer des signaux correspondant au déplacement simulé d'un capteur fictif dont l'axe reliant les deux enroulements est perpendiculaire à l'axe reliant les enroulements du capteur utilisé lors du balayage réel de la surface.

B 7357.3 GP

11 0074889

Ainsi, si l'on suppose que le tableau de la figure 1b a été rempli à l'aide d'un capteur différentiel dont les deux enroulements sont alignés avec la direction de déplacement 16, la relecture du tableau suivant une direction perpendiculaire à celle du remplissage simule le déplacement d'un capteur dont l'axe reliant les deux enroulements est perpendiculaire à la direction du déplacement. Les signaux ainsi restitués sont appelés pseudo-différentiels et, sans avoir les caractéristiques d'un vrai signal différentiel (symétrie, en particulier), ils en possèdent un certain nombre de caractères (immunité à la dérive et à l'entrefer).

A l'inverse du cas précédent, si l'acquisition des données a été faite avec une orientation des enroulements orthogonale à la direction du déplacement, le tableau de la figure 1b sera rempli de mesures pseudo-différentielles, mais le signal reconstitué en mettant bout à bout les valeurs selon la direction perpendiculaire au remplissage simulera une mesure différentielle vraie.

Une autre possibilité offerte par la relecture du tableau de la figure 1b consiste à réaliser par simulation un accroissement de la taille ou une modification de la forme du capteur utilisé réellement lors du balayage. Dans ce cas, il faut supposer que le tableau de la figure 1b a été rempli à l'aide d'un capteur absolu de très petite dimension.

Il est alors possible, au moment de la relecture du tableau, de grouper plusieurs cases contiguës du tableau (par exemple quatre comme l'illustrent les lignes $G_1$ sur la figure 2a) et de calculer la valeur moyenne des valeurs échantillonnées contenues dans ces cases afin de simuler le balayage de la pièce au moyen d'un capteur absolu fictif de plus grande dimension.

B 7357.3 GP

De plus, et comme l'illustre la figure 2b, on peut, en effectuant la différence entre les valeurs moyennes des valeurs échantillonnées contenues dans deux groupes voisins de cases $G_2$, simuler un contrôle au moyen d'un capteur différentiel fictif 14' de la forme voulue adaptée au type de défaut recherché.

On décrira maintenant, à titre d'exemples, trois dispositifs particuliers permettant de mettre en oeuvre le procédé de contrôle dont le principe vient d'être exposé.

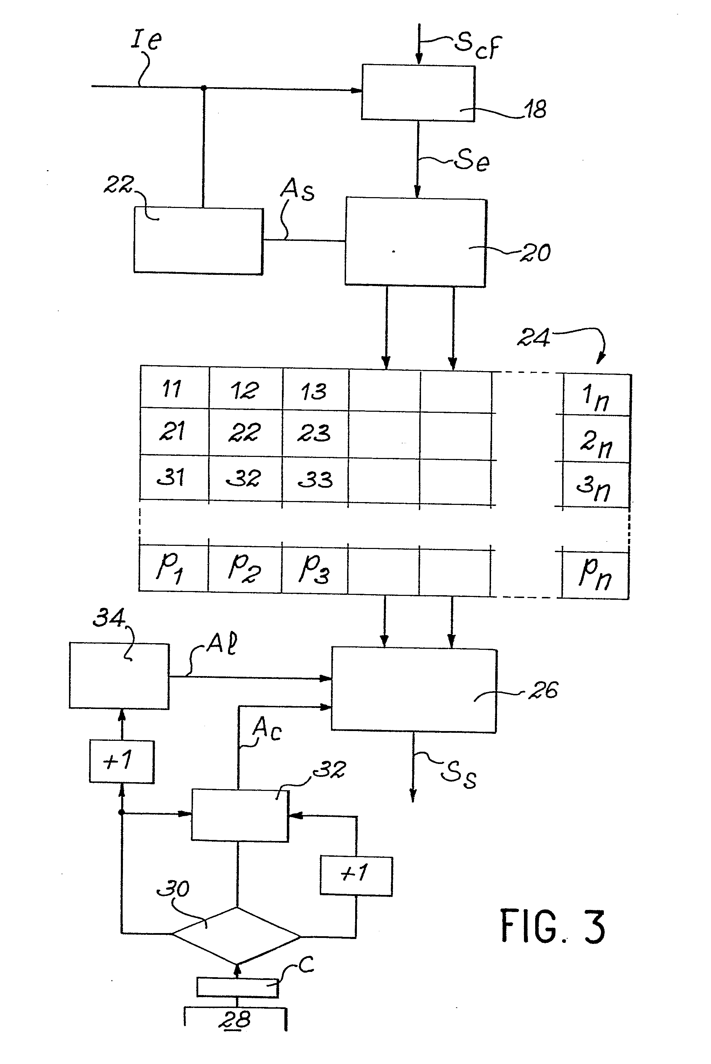

Ainsi, la figure 3 illustre de façon schématique un dispositif de contrôle dans lequel la simulation est obtenue par un traitement numérique d'une matrice de données. On voit que le signal $S_{cf}$ provenant de l'appareillage à courants de Foucault (non représenté) est introduit dans un échantillonneur bloqueur 18 qui reçoit une impulsion d'échantillonnage $I_e$ chaque fois que le capteur à courants de Foucault se déplace d'une valeur égale au pas $\underline{a}$ établi à l'avance. Cette impulsion $I_e$ peut notamment être délivrée par un capteur de déplacement (non représenté) associé au capteur.

A chaque impulsion d'échantillonnage $I_e$, l'échantillonneur bloqueur 18 délivre un signal échantillonné $S_e$ qui correspond à la valeur échantillonnée du signal $S_{cf}$ délivré à cet instant par le capteur. Chaque signal échantillonné $S_e$ parvient dans un processeur d'écriture-mémoire 20 qui l'injecte dans une mémoire 24, en même temps que l'adresse de stockage $A_s$ qui lui correspond. L'adressage des signaux $S_e$ est réalisé au moyen d'un compteur incrémental 22 sensible aux impulsions d'échantillonnage $I_e$ pour associer dans la mémoire 24 une adresse de stockage $A_s$ à chacun des signaux échantillonnés $S_e$. On reconstitue ainsi dans la mémoire 24 le tableau de la figure 1b. Si le décou-

page de la surface contrôlée détermine un tableau à $n$ colonnes et $p$ lignes, la mémoire 22 emmagasine ainsi une matrice de n.p données. Chaque case de la matrice peut, par exemple, être repérée par un numéro à deux chiffres dont le premier indique la ligne, et le second la colonne, comme l'illustre la figure 3.

La lecture des informations emmagasinées dans la mémoire 22 s'effectue au moyen d'un processeur de lecture 26 sensible à un signal d'adresse de ligne $A_1$ et à un signal d'adresse de colonne $A_c$, pour délivrer une série de signaux de sortie $S_s$ correspondant aux signaux emmagasinés dans les cases ainsi repérées.

Dans la variante de réalisation représentée, la matrice définie par la mémoire 24 est relue colonne par colonne. A cet effet, une horloge de relecture 28 envoie des impulsions à un compteur C dont la sortie est appliquée à un comparateur 30 qui compare le contenu du compteur C à l'adresse $p$ de la dernière ligne. Lorsque le contenu de C est différent de $p$, une unité est ajoutée dans un compteur de colonne 32 qui délivre le signal d'adresse de colonne $A_c$. Au contraire, lorsque le contenu de C devient égal à $p$, une unité est ajoutée à un compteur de ligne 34 qui délivre le signal d'adresse de ligne $A_1$. Simultanément, le compteur 32 est remis à zéro. Ainsi, en partant de la case 1-1 de la mémoire 24, le processeur 26 délivrera successivement les signaux contenus dans les cases 2-1, 3-1 ... P-1, 1-2, 2-2, 3-2,... P-2,.... 1-n, 2-n, 3-n,... p-n.

Bien entendu, le dispositif câblé représenté sur la figure 3 ne peut être utilisé que lorsque l'enregistrement des données peut être limité dans le temps (par exemple lors de l'examen d'une zone bien déterminée d'une pièce suivi d'un temps mort qui peut être mis à profit pour effectuer un traitement). En effet, cette technique se heurte à la limite de capacité des mémoires. Lors d'une prise de données en continu, un traitement simultané de la matrice permettant de libérer la mémoire est donc nécessaire. Les valeurs ainsi traitées peuvent être soit utilisées pour un enregistrement graphique, comme si elles sortaient directement de l'appareil à courants de Foucault, soit transmises à une autre unité de calcul qui effectue les traitements voulus sur ces signaux simulés.

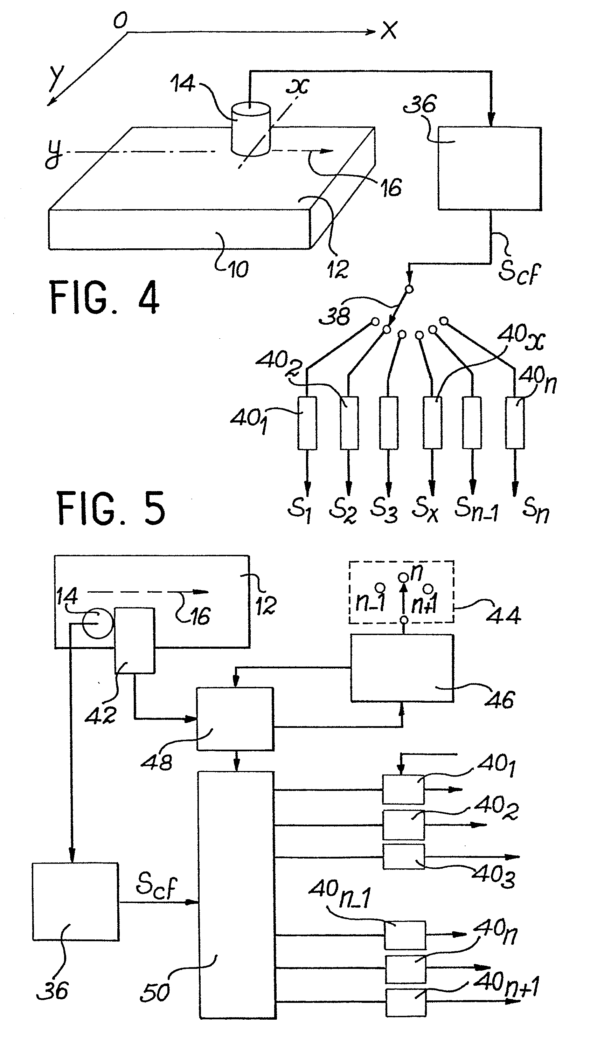

On a représenté sur la figure 4 un deuxième dispositif de mise en oeuvre du procédé de l'invention qui, bien que moins riche en possibilités que le dispositif précédent, permet toutefois d'éviter tout traitement lors d'un travail en continu, et se révèle en fait très simple et très agréable à utiliser dans les mesures courantes. En effet, dans ce dispositif, les signaux apparaissent en temps réel, comme si le déplacement fictif était effectivement réalisé.

Le principe de ce second dispositif est simple. En effet, au lieu de stocker les valeurs échantillonnées mesurées dans une mémoire à n p points, on les aiguille directement vers une sortie délivrant le signal synthétisé.

De façon plus précise, on voit sur la figure 4 que le signal $S_{cf}$ délivré par l'appareil à courant de Foucault 36 auquel est relié le capteur 14, est aiguillé en 38 vers $\underline{n}$ voies numérotées 1 à $\underline{n}$. Chacune de ces voies correspond à l'une des colonnes du tableau de la figure 1b lorsque le capteur 14 se déplace ligne par ligne comme l'indique la flèche 16 sur la figure 4. Chacune des voies 1 à n est équipée d'un échantillonneur bloqueur, $40_1$ à $40_n$, qui délivre des signaux de sortie $S_1$ à $S_n$ qui sont acheminés vers n enregistreurs (non représentés) sur lesquels apparaissent les variations des signaux $S_1$ à $S_n$ en fonction du temps.

B 7357.3 GP

Comme on l'a exposé en se référant à la figure 1a, la surface 12 de la pièce 10 à contrôler est découpée selon la direction OX en $\underline{n}$ colonnes et selon la direction OY en $\underline{p}$ lignes. L'acquisition des données se faisant suivant la direction OX qui est découpée en n colonnes, lorsque le capteur occupe la position d'abscisse x la mesure échantillonnée est aiguillée en 38 et bloquée en $40_x$ sur la $x^{ième}$ sortie du dispositif. Lorsque le capteur est à la position x + 1, le signal échantillonné est aiguillé en 38 et bloqué en $40_{x+1}$ sur la x + unième sortie, etc. Lorsque le capteur a décrit une ligne d'ordonnée y, une valeur a été prise sur chacune des n sorties des échantillonneurs bloqueurs. Le capteur continuant sur la ligne suivante y + 1 enverra la valeur suivante sur chacune des n sorties des échantillonneurs bloqueurs. Ainsi, à chaque ligne décrite, chaque sortie recevra le signal $S_x$ correspondant à l'abscisse x qu'elle représente. Les mesures mises bout à bout sur chacune des sorties simulent donc bien n déplacements simultanés suivant la direction OY, tels qu'ils pourraient être obtenus par n capteurs disposés côte à côte et se déplaçant suivant cette direction OY.

La figure 5 représente une variante du dispositif de la figure 4 permettant également de simuler deux déplacements à 45° et 135° par rapport à la direction d'acquisition des données. Comme sur la figure 4, la surface 12 de la pièce est découpée en n pas d'acquisition dans le sens de déplacement correspondant à la flèche 16, le support 42 du capteur 14 délivrant une impulsion à chaque pas. Le système de simulation des signaux dispose pour sa part de n + 1 sorties numérotées $S_1$ à $S_{n+1}$, qui ne sont pas toujours toutes utilisées comme on le verra par la suite.

B 7357.3 GP

Le dispositif se distingue notamment de celui de la figure 4 par la présence d'un sélecteur de déplacement fictif qui peut être placé selon l'utilisation souhaitée sur les valeurs n-1, n ou n+1. La valeur affichée sur le sélecteur est comparée dans un comparateur 46 au code d'aiguillage et d'échantillonnage constitué par le contenu d'un compteur 48 recevant les impulsions fournies par le détecteur de pas 42 associé au capteur 14. Le code d'aiguillage et d'échantillonnage est introduit en même temps que le signal $S_{cf}$ délivré par l'appareil à courants de Foucault 36 dans un démultiplexeur analogique 50 aiguillant les différents signaux $S_{cf}$ successivement sur chacune des voies conduisants aux sorties 1 à n + 1, à n ou à n - 1 selon la position du sélecteur 44, chacune des voies comportant un échantillonneur bloqueur $40_1$ à $40_{n+1}$ comme dans le dispositif de la figure 4.

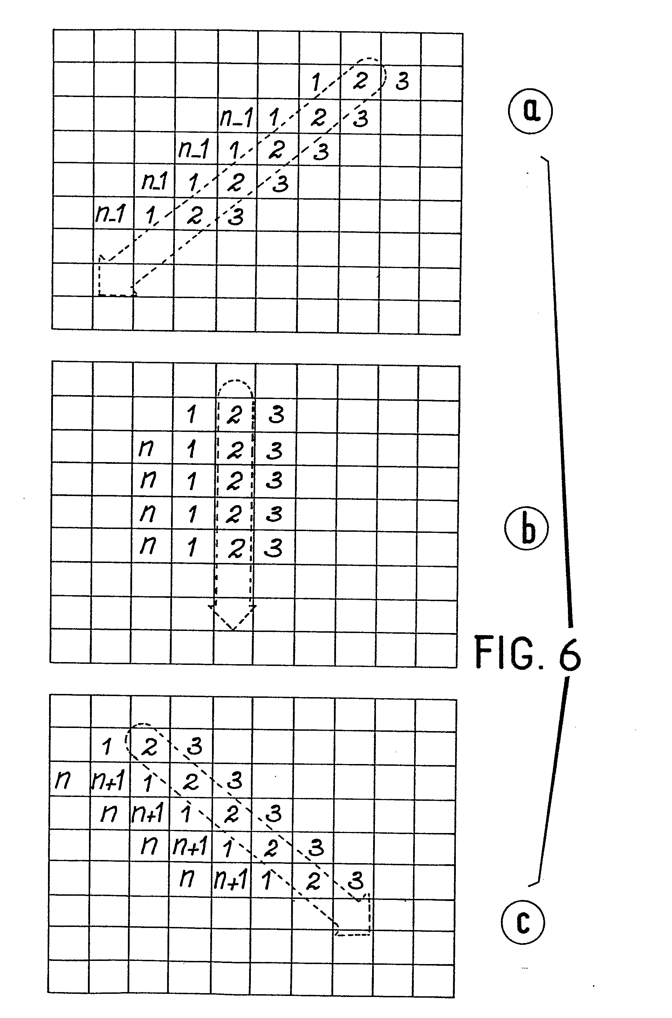

Lorsque le sélecteur 44 est placé sur la position n, le fonctionnement du dispositif de la figure 5 est identique à celui qui a été décrit précédemment en se référant à la figure 4, chacune des n sorties utilisées délivrant un signal correspondant à un déplacement fictif du capteur orthogonal à son déplacement réel, comme l'illustre la figure 6b.

Lorsque le sélecteur 44 est placé sur la position n-1, une remise à zéro hâtive du compteur 48 aiguille la nième mesure non vers la nième sortie mais vers la première. C'est donc la deuxième sortie qui reçoit le signal qui aurait dû revenir à la première. Ceci a pour conséquence d'orienter le déplacement fictif à la rencontre du déplacement réel puisqu'il y a à chaque ligne anticipation des prises de donnée par rapport à l'abscisse sur la ligne précédente. Cette situation simulant le déplacement en oblique de n-1 capteurs, dans laquelle seules n-1 sorties sont utilisées, est illustrée sur la figure 6a.

A l'opposé, le sélecteur positionné sur n+1 introduit un retard dans le retour à la première sortie chaque fois que le capteur a décrit une ligne. Il en résulte un glissement des valeurs dans le sens du déplacement du capteur, donc un déplacement fictif en oblique selon une direction orthogonale à la précédente. Cette situation, dans laquelle les n+1 sorties sont utilisées, est illustrée sur la figure 6c.

Dans l'application de ce procédé et des dispositifs qui lui correspondent à la recherche de fissures dans les tubes des générateurs de vapeur équipant les réacteurs nucléaires ainsi que dans l'examen des crayons combustibles irradiés équipants ces réacteurs, on conçoit qu'il est possible de simuler le déplacement en translation d'une sonde à partir du mouvement  suivant une hélice de pas donné, d'une tête tournante traditionnelle. De nombreux problèmes de déplacement des capteurs peuvent ainsi être résolus.

B 7357.3 GP

## REVENDICATIONS

1. Procédé de contrôle de la surface (12) d'une pièce (10) au moyen d'un capteur (14) à courants de Foucault comprenant au moins une sonde à courants de Foucault délivrant un signal ($S_{cf}$) représentatif de l'état de cette surface, caractérisé en ce qu'il consiste à :

- effectuer avec le capteur un balayage selon un ordre donné de zones de mesure élémentaires définies à la surface de la pièce,

- enregistrer les valeurs échantillonnées du signal délivré par le capteur pour chacune des zones de mesure élémentaires, et

- restituer des signaux obtenus à partir d'une ou plusieurs valeurs échantillonnées correspondant à des zones voisines de la surface, dans un ordre quelconque souhaité.

2. Procédé selon la revendication 1, caractérisé en ce que l'on utilise un capteur absolu comportant au moins une sonde comprenant une seule bobine à courants de Foucault.

3. Procédé selon la revendication 1, caractérisé en ce que l'on utilise un capteur différentiel comportant au moins une sonde comprenant deux bobines à courants de Foucault.

4. Procédé selon l'une quelconque des revendications précédentes, caractérisé en ce que l'on restitue des signaux correspondant chacun à l'une des valeurs échantillonnées enregistrées, selon un ordre différent de l'ordre de balayage.

5. Procédé selon la revendication 4, caractérisé en ce que lesdites zones définissent au moins deux directions (OX, OY), l'ordre de balayage suivant

B 7357.3 GP

une première direction (OX) et l'ordre de restitution des signaux suivant une direction différente de cette première direction.

6. Procédé selon la revendication 2, caractérisé en ce que l'on restitue des signaux dont chacun est représentatif de la valeur moyenne d'un groupe ($G_1$) de valeurs échantillonnées correspondant à des zones voisines.

7. Procédé selon la revendication 2, caractérisé en ce que l'on restitue des signaux dont chacun est représentatif de la différence entre les valeurs échantillonnées correspondant à deux zones voisines.

8. Procédé selon la revendication 2, caractérisé en ce que l'on restitue des signaux dont chacun est représentatif de la différence entre les valeurs moyennes de deux groupes ($G_2$) de valeurs échantillonnées correspondant à des zones voisines.

9. Dispositif de contrôle de la surface (12) d'une pièce (10) au moyen d'un capteur (14) à courants de Foucault comportant au moins une sonde à courants de Foucault délivrant un signal ($S_{cf}$) représentatif de l'état de cette surface, caractérisé en ce qu'il comprend des moyens pour faire balayer par ledit capteur, selon un ordre donné, des zones de mesure élémentaires définies à la surface de la pièce, des moyens (18, 20, 22) pour entrer en mémoire les valeurs échantillonnées du signal délivré par le capteur pour chacune des zones élémentaires et des moyens (26, 30, 32, 34) pour restituer une série de signaux à partir d'une ou plusieurs valeurs échantillonnées correspondant à des zones voisines de la surface, dans un ordre quelconque souhaité.

10. Dispositif de contrôle de la surface (12) d'une pièce (10) au moyen d'un capteur (14) à courants de Foucault comprenant au moins une sonde à

B 7357.3 GP

courants de Foucault délivrant un signal représentatif de l'état de cette surface, caractérisé en ce qu'il comprend des moyens pour faire balayer par ledit capteur, selon un ordre donné, des zones de mesure élémentaires définies à la surface de la pièce et formant au moins deux directions différentes (OX, OY), l'ordre de balayage suivant une première (OX) de ces directions, des moyens (38, 50) pour aiguiller vers des voies différentes chacune des valeurs échantillonnées du signal délivré par le capteur pour chacune des zones de mesure élémentaires correspondant à cette première direction, et des moyens ($40_1, \ldots 40_{n+1}$) pour enregistrer sur chacune des voies les valeurs échantillonnées selon un ordre correspondant à une autre direction.

B 7357.3 GP

FIG. 1$_a$

FIG. 1$_b$

FIG. 2a

FIG. 2b

FIG. 3

4,5

0074889

FIG. 4

FIG. 5

5 , 5          0074889

FIG. 6